(19) **Europäisches Patentamt / European Patent Office / Office européen des brevets**

(11) **EP 2 048 475 B1**

(12) **FASCICULE DE BREVET EUROPEEN**

(45) Date de publication et mention
de la délivrance du brevet:
**26.02.2014 Bulletin 2014/09**

(51) Int Cl.:
**G01C 21/16** (2006.01)

(21) Numéro de dépôt: **08290940.9**

(22) Date de dépôt: **07.10.2008**

(54) **Procédé de détermination de l'attitude, de la position et de la vitesse d'un engin mobile**

Verfahren zur Bestimmung der Lage, Position und Geschwindigkeit eines beweglichen Geräts

Method of determining the attitude, position and velocity of a mobile unit

(84) Etats contractants désignés:
**DE FR GB IT NL SE**

(30) Priorité: **12.10.2007 FR 0707161**

(43) Date de publication de la demande:
**15.04.2009 Bulletin 2009/16**

(73) Titulaires:
- **Institut Franco-Allemand de Recherches de Saint-Louis**
  **68301 Saint-Louis Cedex (FR)**
- **Supelec**
  **91192 Gif sur Yvette Cédex (FR)**

(72) Inventeurs:
- **Changey, Sébastien**
  **68190 Ensisheim (FR)**
- **Fleck, Volker**
  **68300 Saint Louis (FR)**
- **Beauvois, Dominique**
  **91192 Gif sur Yvette Cedex (FR)**

(56) Documents cités:
**EP-A- 0 838 692       US-A1- 2002 008 661**
**US-A1- 2005 240 347**

- **GABRIEL GRENON ET AL: "Enhancement of the Inertial Navigation System for the Morpheus Autonomous Underwater Vehicles" IEEE JOURNAL OF OCEANIC ENGINEERING, IEEE SERVICE CENTER, PISCATAWAY, NJ, US, vol. 26, no. 4, 1 octobre 2001 (2001-10-01), pages 548-560, XP011042600 ISSN: 0364-9059**

## Description

L'invention concerne le domaine des systèmes de navigation inertiels et a plus particulièrement pour objet un dispositif permettant de déterminer à bord d'un engin volant (missile, projectile, drone, ...) ou pas, sa position angulaire (attitude) et spatiale (position) par rapport à un repère terrestre.

Classiquement, les centrales inertielles utilisées dans les missiles et dans les projectiles sont fondées sur l'intégration des vitesses de rotations et des accélérations mesurées en vol. Ces méthodes exigent, pour être précises, l'emploi de capteurs embarqués de haute qualité et donc coûteux pour limiter les bruits et biais de mesure. En effet, les intégrations successives engendrent des dérives très importantes sur les angles d'attitude et les coordonnées spatiales.

A ce titre, on connaît la demande de brevet US2005/0240347 qui décrit une centrale inertielle comportant notamment un magnétomètre 3 axes, un gyromètre 3 axes et un accéléromètre 3 axes et qui fonctionne sur 2 modes :

- un mode dit «statique» qui fait intervenir la mesure de la direction de la gravité,
- un mode dit «dynamique», plus complexe, qui commence par estimer les erreurs, notamment celles dues à la dérive des différents capteurs, avant de réaliser une prédiction, ce qui n'est pas compatible avec un fonctionnement en temps réel, sauf à utiliser des capteurs de très haute gamme ayant une dérive extrêmement faible mais en contrepartie une fiabilité faible.

Le but de l'invention est de proposer une centrale inertielle fonctionnant en mode dynamique en temps réel et nécessitant l'utilisation de magnétomètres dans 3 directions, de gyromètres dans 3 directions et d'accéléromètres dans 3 directions et permettant l'utilisation de capteurs bas de gamme pouvant notamment présenter des défauts d'alignement.

La solution apportée est un procédé de détermination de l'attitude, de la position et de la vitesse d'un engin mobile à partir de la connaissance de la direction du champ magnétique terrestre dans un repère absolu et des signaux échantillonnés fournis à des moyens de traitement de ces signaux par des moyens de mesures gyroscopiques selon trois axes, des moyens de mesures accélérométriques selon trois axes et des moyens de mesures magnétiques selon trois axes, ces moyens de mesures étant disposés à bord de l'engin et selon trois repères tridimensionnels liés au repère engin $O_eX_eY_eZ_e$, et, caractérisés en ce qu'il comporte :

- une première étape de calcul de l'attitude de l'engin à l'instant k+1 à partir :

  - des signaux issus des moyens de mesures gyroscopiques à l'instant k,
  - des signaux issus des moyens de mesures accélérométriques à l'instant k+1,
  - de la position et de la vitesse de l'engin dans le repère absolu à l'instant k,
  - des signaux fournis par les moyens de mesures magnétiques représentatifs de la projection du champ magnétique terrestre dans le repère magnétique tridimensionnel lié à l'engin,
  - éventuellement du calcul d'une prédiction de l'attitude de l'engin par un modèle de mécanique du vol.

- une seconde étape de calcul de la position de l'engin et de sa vitesse dans le repère absolu à l'instant k+1 à partir :

  - de l'attitude calculée dans la première étape,
  - des signaux issus des moyens de mesures accélérométriques à l'instant k+1,
  - des signaux issus des moyens de mesures gyroscopiques à l'instant k+1,
  - de la position et de la vitesse de l'engin dans le repère absolu à l'instant k,
  - des signaux fournis par les moyens de mesures magnétiques représentatifs de la projection du champ magnétique terrestre dans le repère,
  - éventuellement du calcul d'une prédiction de la position de l'engin par un modèle de mécanique du vol.

On appelle modèle, la connaissance a priori de la description de l'engin, c'est-à-dire ses paramètres mécaniques et ses coefficients aérodynamiques.

L'originalité de l'invention consiste à utiliser un modèle comportemental de l'engin à localiser angulairement et spatialement. Ainsi, les informations apportées par le modèle permettent de calibrer les défauts des capteurs et / ou de s'affranchir de certains capteurs ; ainsi l'apport d'information donnée par la connaissance du modèle permet de calibrer les capteurs et leur défaut et donc d'augmenter la précision des estimations. Ainsi, des capteurs bas coût suffisent pour effectuer les estimations. L'intérêt de maîtriser le modèle comportemental de l'engin permet de combiner astucieusement les capteurs et les méthodes pour estimer les données recherchées et permet, en plus d'intégrer directement les capteurs, d'intégrer les équations différentielles du modèle en utilisant les capteurs pour recaler les intégrations obtenues.

Des combinaisons astucieuses de ces capteurs, couplées à la connaissance du comportement de l'engin, par un modèle, vont permettre de déterminer avec précision, l'attitude et la position de l'engin.

En outre, l'utilisation seulement de moyens de mesures gyroscopiques selon trois axes, de moyens de mesures accélérométriques selon trois axes et de moyens de mesures magnétiques selon trois axes, est suffisante pour déterminer l'attitude et la position de l'engin donc sa trajectoire. Selon une caractéristique particulière, la première étape comporte une première sous-étape consistant à déterminer au moins l'un des angles de l'attitude, par exemple l'angle de roulis, puis une seconde sous-étape consistant à déterminer des valeurs de calibration des moyens de mesures gyroscopiques et magnétiques à partir des signaux fournis par les moyens de mesures magnétiques représentatifs de la projection du champ magnétique terrestre dans le repère de l'engin et de la connaissance de la direction du champ magnétique terrestre dans un repère absolu puis une troisième sous-étape de calcul de l'attitude de l'engin à l'instant k+1 à partir :

- des signaux issus des moyens de mesures gyroscopiques à l'instant k,
- de la position et de la vitesse de l'engin dans le repère absolu à l'instant k,
- des dites valeurs de calibration.

Selon une caractéristique particulière, la seconde étape comporte une première sous-étape consistant à calculer l'enveloppe magnétique $\overline{H}_{env}$ des signaux des mesures magnétiques à partir des valeurs des angles d'attitude ($\alpha$, $\beta$, $\varphi_2$) calculés par lesdits premiers moyens à l'instant k+1 et des mesures faites par le magnétomètre des projections du champ magnétique terrestre dans le repère magnétique de l'engin, une deuxième sous étape consistant à déterminer des valeurs de calibration des moyens de mesures accélérométriques à partir de l'enveloppe magnétique calculée $\overline{H}_{env}$ et de la connaissance de la direction du champ magnétique terrestre dans un repère absolu puis une troisième sous-étape de calcul de la position de l'engin et de sa vitesse dans le repère absolu à l'instant k+1 à partir des signaux fournis par les moyens de mesures et des valeurs de calibration calculées.

Selon une caractéristique particulière, les première et seconde étapes sont mises en oeuvre par des filtres de Kalman.

Selon une caractéristique particulière permettant de s'affranchir des problèmes de dysfonctionnement de certains des moyens de mesures, un procédé selon l'invention comporte une sous-étape de calcul de la trajectoire estimée de l'engin à partir d'un modèle comportemental à partir de ses paramètres mécaniques, à savoir notamment sa masse, son calibre et le profil des coefficients aérodynamiques.

La présente invention permet de corriger les dérives des moyens de mesures gyroscopiques et accélérométriques en se recalant sur une référence fixe qui est la direction du champ magnétique terrestre. Ainsi, l'invention permet de déterminer en temps réel et de façon précise l'attitude et la position de l'engin à partir de capteurs (magnétomètres, gyromètres et accéléromètres) aux performances limitées, produits en grande série et donc bas coûts. En outre, l'invention permet de corriger l'altération des caractéristiques des capteurs due à l'effet de fortes sollicitations comme celles induites lors du lancement de l'engin par effet canon.

Il s'agit donc à partir uniquement de 3 capteurs bas coûts et résistants à de très fortes accélérations de déterminer :

- la position $x$, $y$ et $z$ de l'engin,
- la norme et la direction de la vitesse de cet engin,
- l'attitude de l'engin autour de sa vitesse, représentée par 3 angles,
- l'attitude globale de l'engin par rapport au sol : 3 angles d'Euler.

Par un système bas coût, on peut finalement réaliser un système équivalent à un GPS.

L'invention propose une calibration dynamique des capteurs, c'est-à-dire que l'on détermine en vol après le lancement les facteurs de calibration et les désalignements des capteurs.

L'invention propose d'utiliser les mesures des gyromètres et des accéléromètres uniquement pour effectuer une première estimation (prédiction) et d'effectuer après intégration une correction à l'aide des mesures des magnétomètres. Cette opération est effectuée par des filtres de Kalman.

L'invention propose d'utiliser dans une large mesure des filtres de Kalman à gain constant pour assurer une grande robustesse à la solution. Le faible bruit des signaux des capteurs magnétiques permet l'emploi de ce type de filtre.

L'invention propose de démoduler les signaux au fur et à mesure du traitement. Ceci permet de diminuer les fréquences d'échantillonnage. En outre cette démodulation des signaux accroît les performances des filtres et apporte des gains en précision.

L'invention propose aussi de doubler les mesures des gyromètres et des accéléromètres par un modèle comportemental qui permet une prévision alternative en cas de défaillance de ces capteurs.

L'invention est robuste à une très forte accélération, de l'ordre de grandeur de celles subies par des obus lors de leur lancement.

Le système complet ne nécessite pas une technologie coûteuse : quelques capteurs bas coûts et un calculateur embarqué avec des performances classiques permettant d'effectuer les calculs.

D'autres avantages et caractéristiques apparaîtront dans la description d'un mode de réalisation de l'invention au regard des figures annexées parmi lesquelles :

- la figure 1 montre un schéma des moyens de mise en oeuvre de l'invention ainsi que les flux d'information entrant et sortant des moyens de traitement,

- la figure 2 montre un organigramme de filtrage de position.

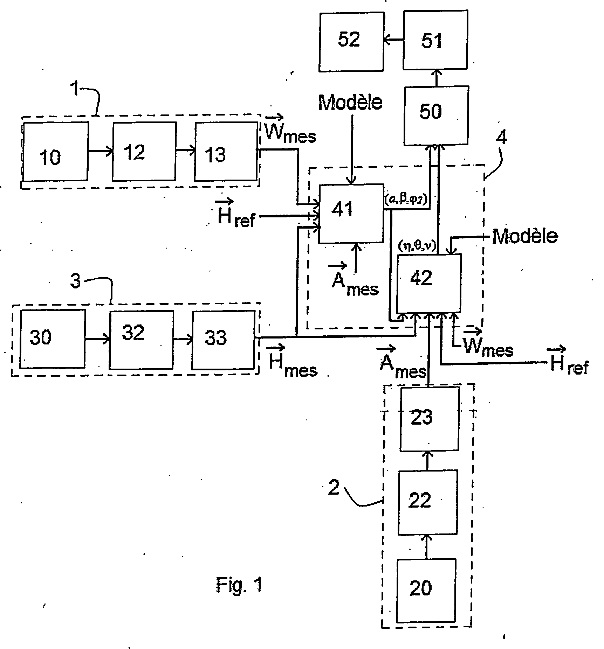

La figure 1 montre un schéma des moyens de mise en oeuvre de l'invention ainsi que les flux d'informations entrant et sortant des moyens de traitement. Ils comportent, de façon connue, des moyens 1 de mesures gyroscopiques selon trois axes quasiment perpendiculaires, des moyens 2 de mesures accélérométriques selon trois axes quasiment perpendiculaires, des moyens 3 de mesures magnétiques selon trois axes quasiment perpendiculaires et des moyens de traitement 4 des signaux issus des moyens 1, 2 et 3 de mesures respectivement, gyroscopiques, accélérométriques et magnétiques.

Dans cet exemple de réalisation, les moyens 1 de mesures gyroscopiques comportent, de façon connue, un gyroscope trois axes 10, un amplificateur 12 et un convertisseur analogique/numérique 13. D'une manière similaire, d'une part, les moyens 2 de mesures accélérométriques comportent un accéléromètre trois axes 20, un amplificateur 22 et un convertisseur analogique/numérique 23, et d'autre part les moyens de mesures magnétiques comportent un magnétomètre trois axes 30, un amplificateur 32 et un convertisseur analogique/numérique 33.

Les moyens 1, 2 et 3 des mesures respectivement gyroscopiques, accélérométriques et magnétiques sont disposés sur un engin volant en vue de déterminer son attitude et sa position à tout instant. Cet engin volant comporte des gouvernes 52 et des moyens de contrôle de la position de ces gouvernes comportant une logique de contrôle 50 et des actionneurs électriques 51 reliés aux gouvernes 52.

Les moyens de traitement comportent des premiers moyens 41 de calcul de l'attitude de l'engin à l'instant k+1 à partir :

- des signaux issus des moyens de mesures gyroscopiques à l'instant k,
- des signaux issus des moyens de mesures accélérométriques à l'instant k+1,
- de la position et de la vitesse de l'engin dans le repère absolu à l'instant k,
- des signaux fournis par les moyens de mesures magnétiques représentatifs de la projection du champ magnétique terrestre dans le repère tridimensionnel lié à l'engin,
  et des seconds moyens 42 de calcul de la position de l'engin et de sa vitesse dans le repère absolu à l'instant k+1 à partir :
- de l'attitude calculée dans la première étape,
- des signaux issus des moyens de mesures accélérométriques à l'instant k+1
- des signaux issus des moyens de mesures gyrométriques à l'instant k+1,
- de la position et de la vitesse de l'engin dans le repère absolu à l'instant k,
- des signaux fournis par les moyens de mesures magnétiques représentatifs de la projection du champ magnétique terrestre dans le repère.

Dans cet exemple de réalisation de l'invention, les premiers et seconds moyens de calcul sont constitués par des filtres de Kalman.

Un des buts de l'invention étant de déterminer l'attitude et la position d'un engin volant par rapport au sol, les vitesses de rotations, les accélérations et les projections du champ magnétique terrestre sont mesurées par lesdits moyens de mesures 1, 2, 3 par rapport à des repères liés à l'engin.

La direction absolue du champ magnétique terrestre par rapport à un repère terrestre fixe $O_T X_T Y_T Z_T$ étant connue, un algorithme, mis en oeuvre par les moyens de traitement 4 et fondé sur plusieurs filtres de Kalman permet d'estimer, en temps réel, toutes les coordonnées nécessaires à la navigation, à savoir :

- la position $x$, $y$ et $z$ par rapport au lieu de tir,
- la direction et la norme du vecteur vitesse : ce vecteur est tangent à la trajectoire de l'engin ; sa direction est déterminée par 2 angles $(\eta, \theta)$ ou par ses composantes $v_x$, $v_y$, $v_z$ dans le repère absolu $O_T X_T Y_T Z_T$. Des formules connues permettent de passer de ces 3 composantes $v_x$, $v_y$, $v_z$ aux 2 angles $(\eta, \theta)$ et à la norme de v : $(\eta, \theta, v) \leftrightarrow (v_x, v_y, v_z)$.
- l'attitude de l'engin autour de son vecteur vitesse. Celle-ci est communément représentée par 3 angles : $\alpha$ l'angle d'attaque, $\beta$ l'angle de dérapage et $\varphi_2$ l'angle de roulis. Il existe d'autres représentations ($\psi$ précession, $\delta$ incidence et $\varphi$ roulis) équivalentes : notre système permet d'estimer l'attitude dans toutes les représentations, étant donné que des formules permettent de passer d'une représentation à l'autre. L'astuce de la méthode réside dans des choix bien précis des différentes représentations pour caractériser l'évolution du mouvement de l'engin et donc des signaux mesurés.

- l'attitude globale de l'engin par rapport au sol : celle-ci est représentée par les 3 angles d'Euler, qui sont des combinaisons des angles décrit précédemment.

Toutes ces grandeurs sont nécessaires à la description complète du système afin de dissocier les dynamiques propres aux différents mouvements. C'est en jouant sur cette décomposition que l'on extrait les différents mouvements du projectile.

Le demandeur emploie ce dispositif dans le but particulier de guider des engins ; il est donc important d'effectuer ces estimations en temps réel afin de pouvoir procéder au pilotage pendant le vol. Il s'agit donc d'avoir des méthodes simples et robustes que l'on peut implanter sur des systèmes embarqués.

Le principe général de la méthode est fondé sur le filtre de Kalman. Cette méthode d'estimation se déroule en deux étapes :

- tout d'abord une première estimation, appelée prédiction, est déterminée par la connaissance que l'on a de l'état de l'engin à l'instant k et par la connaissance de son évolution entre les instants k et k+1 ;
- puis en comparant la valeur du champ magnétique terrestre rapporté dans le repère de l'engin et en mesurant les projections du champ magnétique terrestre sur les 3 axes du projectile à l'instant k+1 avec le magnétomètre trois axes 30, l'algorithme de Kalman corrige les erreurs de prédictions afin de calculer l'estimation.

$$\text{Estimation} = \text{Prédiction} + \text{Correction (mesure, prédiction)}$$

Dans le cas de notre invention, la correction est calculée par rapport à une référence fixe (le champ magnétique terrestre). Ainsi, contrairement aux systèmes de navigation existant actuellement, toutes les dérives éventuelles dues aux calculs des prédictions peuvent être quantifiées et donc corrigées.

L'algorithme général est présenté sur la figure 1, avec comme notations :

- $\overline{H}_{ref}$ désigne la direction du champ magnétique terrestre dans le repère absolu,
- $\overline{H}_{mes}$ désigne les projections du champ magnétique terrestre, mesurées sur les 3 axes de l'engin,
- $\overline{A}_{mes}$ désigne les mesures des accéléromètres,
- $\overline{W}_{mes}$ désigne les mesures des gyromètres.

Cet algorithme se déroule en 2 temps matérialisés par 2 sous blocs.

Tout d'abord, les premiers moyens de calcul 41 permettent de déterminer l'estimation de l'attitude. Cette étape est appelée filtrage d'attitude. Une combinaison de filtres de Kalman permet d'estimer les angles décrivant l'attitude de l'engin $(\alpha, \beta, \varphi_2)$ autour de son vecteur vitesse, à partir :

1 - des prédictions calculées à partir du modèle mécanique, et/ou bien des prédictions calculées en intégrant les vitesses de rotation $\overline{W}_{mes}$ mesurées autour des 3 axes de l'engin par le gyromètre 10 (On peut aussi utiliser astucieusement les 2 méthodes en parallèle),
2 - des mesures provenant des accéléromètres ;
3 - de la position $(x, y, z)$ et de la vitesse $(\eta, \theta, v)$ de l'engin ;
4 - de la mesure de la projection du champ magnétique terrestre sur les axes du repère magnétique de l'engin connaissant la direction du champ magnétique dans le repère lié à la Terre.

Ce premier filtrage peut se décomposer lui-même en plusieurs sous filtrages, compte tenu des dynamiques du projectile. Aussi, il est nécessaire d'estimer les facteurs de calibration de manière dynamique, en vol, sur le projectile. Dans le cas d'un projectile fortement gyroscopé, la méthode proposée consiste d'abord à estimer l'angle de roulis, puis la calibration des capteurs, puis de procéder, de façon connue, à la démodulation des signaux de mesure afin d'en extraire l'attitude.

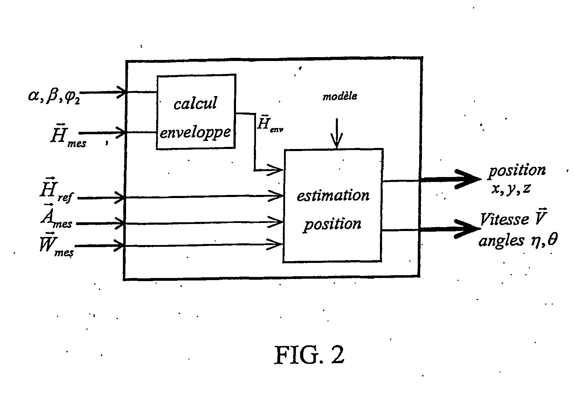

Un second filtrage, appelé filtrage de position, est effectué par les seconds moyens de calcul 42. L'organigramme de mise en oeuvre de ce filtrage est présenté sur la figure 2. Il permet d'estimer le vecteur vitesse et la position de l'engin. Ces seconds moyens 42 calculent dans un premier temps l'enveloppe $\overline{H}_{env}$ des signaux des mesures magnétiques à partir des valeurs des angles d'attitude $(\alpha, \beta, \varphi_2)$ calculés par lesdits premiers moyens à l'instant k+1 et des mesures faites par le magnétomètre des moyens de mesures magnétiques des projections du champ magnétique terrestre dans le repère magnétique de l'engin. Il s'agit en fait de séparer la composante lente des signaux de la composante rapide. En effet, la composante lente est représentative du mouvement de la trajectoire.

L'enveloppe $\overline{H}_{env}$ ainsi calculée représente ainsi un signal de mesure virtuelle. L'estimation de la position peut alors s'effectuer toujours en utilisant le filtrage de type Kalman, utilisant :

- la mesure virtuelle de l'enveloppe de signaux magnétiques provenant du magnétomètre 30, connaissant la direction du champ magnétique dans le repère lié à la Terre.
- les prédictions de la vitesse et de la position calculées à partir du modèle mécanique et / ou en utilisant les informations $\overline{A}_{mes}$ fournies par les accéléromètres 20.

Nous obtenons ainsi un algorithme complet de traitement qui permet, à partir d'une combinaison de plusieurs filtres, d'extraire toutes les informations nécessaires à la navigation de l'engin via la logique de contrôle 50, les actionneurs 51 et les gouvernes 52. L'estimation de l'attitude est précise au degré près sur les 3 angles dans le cas de projectiles fortement gyroscopés.

Concernant l'estimation de la localisation, les précisions sont de l'ordre de 1% sur les coordonnées et sur la vitesse.

Le dispositif peut aussi être utilisé à bord de tout véhicule, volant ou non.

**Revendications**

1.  Procédé de détermination de l'attitude, de la position et de la vitesse d'un engin mobile à partir de la connaissance de la direction du champ magnétique terrestre dans un repère absolu, des signaux échantillonnés fournis à des moyens de traitement (4) de ces signaux par des moyens (1) de mesures gyroscopiques selon trois axes, des moyens (2) de mesures accélérométriques selon trois axes et des moyens (3) de mesures magnétiques selon trois axes, ces moyens de mesures étant disposés à bord de l'engin et selon trois repères tridimensionnels liés au repère engin $O_e X_e Y_e Z_e$, et, **caractérisé en ce qu'**il comporte :

    - une première étape de calcul de l'attitude de l'engin à l'instant k+1 à partir :

        - des signaux issus des moyens (1) de mesures gyroscopiques à l'instant k,
        - des signaux issus des moyens (2) de mesures accélérométriques à l'instant k+1
        - de la position et de la vitesse de l'engin dans le repère absolu à l'instant k,
        - des signaux fournis par les moyens (3) de mesures magnétiques représentatifs de la projection du champ magnétique terrestre dans le repère magnétique tridimensionnel lié à l'engin,

    - une seconde étape de calcul de la position de l'engin et de sa vitesse dans le repère absolu à l'instant k+1 à partir :

        - de l'attitude calculée dans la première étape,
        - des signaux issus des moyens (2) de mesures accélérométriques à l'instant k+1,
        - des signaux issus des moyens (1) de mesures gyroscopiques à l'instant k+1,
        - de la position et de la vitesse de l'engin dans le repère absolu à l'instant k,
        - des signaux fournis par les moyens (3) de mesures magnétiques représentatifs de la projection du champ magnétique terrestre dans le repère.

2.  Procédé selon la revendication 1, **caractérisé en ce que** la première étape de calcul de l'attitude consiste en outre à calculer une prédiction de l'attitude de l'engin par un modèle de mécanique du vol.

3.  Procédé selon l'une quelconque des revendications 1 et 2, **caractérisé en ce que** la première étape comporte une première sous-étape consistant à déterminer au moins l'un des angles de l'attitude, par exemple l'angle de roulis, puis une seconde sous-étape consistant à déterminer des valeurs de calibration des moyens (1) de mesures gyroscopiques et magnétiques à partir des signaux fournis par les moyens (3) de mesures magnétiques représentatifs de la projection du champ magnétique terrestre dans le repère engin et de la connaissance de la direction du champ magnétique terrestre dans un repère absolu puis une troisième sous-étape de calcul de l'attitude de l'engin à l'instant k+1 à partir :

        - des signaux issus des moyens (1) de mesures gyroscopiques à l'instant k,
        - de la position et de la vitesse de l'engin dans le repère absolu à l'instant k,

- des dites valeurs de calibration.

4.	Procédé selon l'une quelconque des revendications 1 à 3, **caractérisé en ce que** la seconde étape de calcul de la position consiste à calculer une prédiction de l'attitude de l'engin par un modèle de mécanique du vol.

5.	Procédé selon l'une quelconque des revendications 1 à 4, **caractérisé en ce que** la seconde étape comporte une première sous-étape consistant à calculer l'enveloppe magnétique $\overline{H}_{env}$ des signaux des mesures magnétiques à partir des valeurs des angles d'attitude ($\alpha$, $\beta$, $\varphi_2$) calculés par lesdits premiers moyens à l'instant k+1 et des mesures faites par les moyens (3) de mesures magnétiques des projections du champ magnétique terrestre dans le repère magnétique de l'engin, une deuxième sous étape consistant à déterminer des valeurs de calibration des moyens (2) de mesures accélérométriques à partir de l'enveloppe magnétique calculée $\overline{H}_{env}$ et de la connaissance de la direction du champ magnétique terrestre dans un repère absolu puis une troisième sous-étape de calcul de la position de l'engin et de sa vitesse dans le repère absolu à l'instant k+1 à partir des signaux fournis par les moyens de mesures et des valeurs de calibration calculées.

6.	Procédé selon l'une quelconque des revendications 1 à 5, **caractérisé en ce que** les première et seconde étapes sont mises en oeuvre par des filtres de Kalman.

7.	Procédé selon l'une quelconque des revendications 1 à 6, **caractérisé en ce qu'**il comporte une sous-étape de calcul de la trajectoire estimée de l'engin à partir d'un modèle comportemental **caractérisé par** les paramètres mécaniques de l'engin, à savoir notamment, sa masse, son calibre et le profil des coefficients aérodynamiques.


**Patentansprüche**

1.	Verfahren zur Bestimmung der Lage, der Position und der Geschwindigkeit eines beweglichen Gerätes, wobei die Richtung des Irdischen Magnetfeldes in einem absoluten Bezugssystem, die Probesignale, die an Verarbeitungsvorrichtungen (4) dieser Signale durch gyroskopische Messvorrichtungen (1) gemäß drei Achsen, durch Beschleunigungsvorrichtungen (2), gemäß drei Achsen geliefert werden, und die magnetische Vorrichtungen (3) gemäß drei Achsen bekannt sind; diese Messvorrichtungen sind im Gerät eingebaut und gemäß drei dreidimensionalen Bezugssysteme an das Bezugssystem des Geräts $O_eX_eY_eZ_e$ verbunden und **dadurch gekennzeichnet, dass** es folgende Merkmahle enthält:

	- eine erste Phase zur Berechnung der Lage des Geräts zum Zeitpunkt k+1 ab:

		- den zum Zeitpunkt k von den gyroskopischen Vorrichtungen (1) kommenden Signale,
		- den zum Zeitpunkt k+1 von den Beschleunigungsvorrichtung (2) kommenden Signale,
		- der Position und der Geschwindigkeit des zum Zeitpunkt k im absoluten Bezugssystem sich befindenden Gerätes,
		- den von den magnetischen Vorrichtungen (3) gelieferte Signale, die charakteristisch für die Darstellung des Irdischen Magnetfeldes im magnetischen dreidimensionalen mit dem Gerät verbundenen Bezugssystem sind.

	- eine zweite Phase zur Berechnung der Position des Gerätes und dessen Geschwindigkeit zum Zeitpunkt K+1 im absoluten Bezugsystem ab:

		- der in der ersten Phase berechneten Lage,
		- den zum Zeitpunkt k+1 von den Beschleunigungsvorrichtung (2) kommenden Signale,
		- den zum Zeitpunkt k+1 von den gyroskopischen Vorrichtungen (1) kommenden Signale,
		- der Position und der Geschwindigkeit des zum Zeitpunkt k im absoluten Bezugssystem sich befindenden Gerätes,
		- den von den magnetischen Vorrichtungen (3) gelieferte Signale, die charakteristisch für die Darstellung des Irdischen Magnetfeldes im Bezugssystem sind.

2.	Verfahren gemäß Anspruch 1, **dadurch gekennzeichnet, dass** die erste Phase der Berechnung der Lage außerdem darin besteht eine Voraussage der Lage des Gerätes durch ein mechanisches Flugmodell zu berechnen.

3.	Verfahren gemäß einem der Ansprüche 1 und 2, **dadurch gekennzeichnet, dass** die erste Phase eine Unterphase enthält, die darin besteht mindestens eines der Winkel der Lage zu bestimmen, zum Beispiel der Winkel des Slingerns, dann eine zweite Unterphase, die darin besteht Kalibrationswerte der gyroskopischen und magnetischen Vorrichtungen (1) zu bestimmen ab den von den magnetischen Vorrichtungen (3) gelieferte Signale, die charakteristisch für die Darstellung des Irdischen Magnetfeldes im Bezugsfeld sind, und der Kenntnis der Richtung des Irdischen Magnetfeldes im absoluten Bezugssystem, dann eine dritte Unterphase zur Berechnung der Lage des Geräts zum Zeitpunkt k+1 ab:

- den zum Zeitpunkt k von den gyroskopischen Vorrichtungen (1) kommenden Signale,
- der Lage und der Geschwindigkeit des Gerätes im absoluten Bezugssystem zum Zeitpunkt k,
- der besagten Kalibrationswerte.

4. Verfahren gemäß einem der Ansprüche 1 bis 3, **dadurch gekennzeichnet, dass** die zweite Phase der Berechnung der Lage darin besteht eine Voraussage der Lage des Geräts durch ein mechanisches Flugmodell zu berechnen.

5. Verfahren gemäß einem der Ansprüche 1 bis 4, **dadurch gekennzeichnet, dass** die zweite Phase eine erste Unterphase enthält, die darin besteht die magnetische Hülle $\overline{H}_{env}$ der Signale der magnetischen Messungen ab den durch die besagten ersten Vorrichtungen zum Zeitpunkt k+1 gemessenen Werten der Winkel der Lage $(\alpha, \beta, \varphi_2)$, und die durch die magnetische Vorrichtungen (3) der Darstellungen des Irdischen Magnetfeldes im magnetischen Bezugssystem des Gerätes, eine zweite Unterphase, die darin besteht die Kalibrationswerte der Beschleunigungsvorrichtungen (2) zu bestimmen ab der magnetischen berechneten Hülle $\overline{H}_{env}$ und die Kenntnis der Richtung des Irdischen Magnetfeldes im absoluten Bezugsystem berechnet, dann eine dritte Unterphase zur Berechnung der Lage des Gerätes sowie dessen Geschwindigkeit im absoluten Bezugssystem zum Zeitpunkt k+1 ab den durch die Messvorrichtungen und den berechneten Kalibrationswerte gelieferten Signale.

6. Verfahren gemäß einem der Ansprüche 1 bis 5, **dadurch gekennzeichnet, dass** die ersten und zweiten Phasen mit Hilfe von Kalman Filter durchgeführt werden.

7. Verfahren gemäß einem der Ansprüche 1 bis 6, **dadurch gekennzeichnet, dass** es eine Unterphase enthält zur Berechnung der geschätzten Flugbahn des Gerätes ab den mechanischen Parametern eines Verhaltensmodell, und zwar seine Masse, sein Kaliber und das Profil der aerodynamischen Koeffizienten.

**Claims**

1. A method for determining the attitude, position, and velocity of a mobile device from knowledge of the direction of the earth's magnetic field in an absolute reference frame, sampled signals supplied to processing means (4) of these signals by gyroscopic measuring means (1) in three axes, accelerometric measuring means (2) in three axes, and magnetic measuring means (3) in three axes, said measuring means being located on-board the device and according to three three-dimentional reference frames connected to the device reference frame $O_eX_eY_eZ_e$, the method comprising:

- a first step in which the attitude of the device is calculated at time k+1 from:

- signals coming from the gyroscopic measuring means (1) at time k,
- signals coming from the accelerometric measuring means (2) at time k+1,
- the position and velocity of the device in the absolute reference frame at time k,
- signals supplied by the magnetic measuring means (3) representing the projection of the earth's magnetic field in the three-dimensional magnetic reference frame linked to the device,

- a second step in which the position of the device and its velocity in the absolute frame point at time k+1 are calculated from:

- the attitude calculated in the first step,
- signals coming from the accelerometric measuring means(2) at time k+1,
- signals coming from the gyroscopic measuring means (1) at time k+1,
- the position and velocity of the device in the absolute reference frame at time k,
- signals supplied by the magnetic measuring means (3) representing the projection of the earth's magnetic field in the reference frame.

**2.** The method according to claim 1, wherein the first attitude calculation step additionally consists of calculating a prediction of the attitude of the device by a mechanical flight model.

**3.** The method according to claim 1, or 2, wherein the first step includes a first substep consisting of determining at least one of the attitude angles, for example the roll angle, then a second substep consisting of determining calibration values of the gyroscopic and magnetic measuring means (1) from the signals furnished by the magnetic measuring means (3) representing the projection of the earth's magnetic field in the reference frame and knowledge of the direction of the earth's magnetic field in an absolute reference frame then a third substep of calculating the attitude of the device at time k+1 from:

- signals coming from the gyroscopic measuring means (1) at time k,
- the position and velocity of the device in the absolute reference frame at time k,
- said calibration values.

**4.** The method according to claim 1, or 2, or 3, wherein the second position calculation step consists of calculating a prediction of the attitude of the device by a mechanical flight model.

**5.** The method according to claim 1, or 2, or 3, or 4, wherein the second step comprises a first substep consisting of calculating the magnetic envelope $\vec{H}_{env}$ of the signals of the magnetic measurements from the values of the attitude angles ($\alpha$, $\beta$, $\varphi_2$) calculated by said first means at time k+1 and measurements made by the magnetic measuring means (3) of the projections of the earth's magnetic field in the magnetic reference frame of the device, a second substep consisting of determining the calibration values of the accelerometric measuring means (2) from the calculated magnetic envelope $\vec{H}_{env}$ and knowledge of the direction of the earth's magnetic field in an absolute reference frame, then a third substep of calculating the position of the device and its velocity in the absolute reference frame at time k+1 from signals furnished by the measuring means and the calculated calibration values.

**6.** The method according to claim 1, or 2, or 3, or 4, or 5, wherein the first and second steps are implemented by Kalman filters.

**7.** The method according to claim 1, or 2, or 3, or 4, or 5, or 6, further comprising a substep of calculating the estimated trajectory of the device from a behavioral model from its mechanical parameters, namely its mass, its caliber, and the profile of aerodynamic coefficients.

Fig. 1

FIG. 2

**EP 2 048 475 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050240347 A